# EUROPÄISCHE PATENTANMELDUNG

(11) **EP 3 511 144 A1**
(43) Veröffentlichungstag der Anmeldung: **17.07.2019**
(21) Anmeldenummer: 18151020.7
(22) Anmeldetag: 10.01.2018
(51) Int. Cl.: B29C 44/14, B29C 44/12, B29C 44/34, B32B 5/20, B60R 13/02, B29K 75/00

(54) **VERFAHREN ZUM ABDICHTEN EINER NAHT, EIN VERBUNDTEIL UND DESSEN VERWENDUNG**

(71) Anmelder: KraussMaffei Technologies GmbH, 80997 München (DE); Covestro Deutschland AG, 51373 Leverkusen (DE)
(72) Erfinder: EICKENS, Sebastian, 47625 Kevelaer (DE); Dr. KUBE, Christian, 53721 Siegburg (DE); SCHENDZIELORZ, Dieter, 40764 Langenfeld (DE)
(74) Vertreter: Wilhelm, Ludwig

(57) **Zusammenfassung**

Die Erfindung betrifft ein Verfahren zum Abdichten von Nähten (4) einer die Nähte aufweisenden Oberflächenschicht (2) auf der Seite der Oberflächenschicht, an die sich flächig eine Schaumschicht oder Klebstoffschicht (8) anschließt, ein Verbundteil und dessen Verwendung. Vorzugsweise umfasst das Verfahren einen kontaktlosen, flächigen Auftrag eines Abdichtungsmaterials auf den Nahtbereich entlang des Nahtverlaufs. Mit Hilfe der Erfindung ist es möglich, das Durchdringen von Schaum - oder Klebstoffmaterial in einem nachfolgenden Verarbeitungsschritt zu verhindern und gleichzeitig die Nachteile der bestehenden Verfahren zu beseitigen.

## Beschreibung

Die Erfindung betrifft ein Verfahren zum Abdichten von Nähten einer die Nähte aufweisenden Oberflächenschicht auf der Seite der Oberflächenschicht, an die sich flächig eine Schaumschicht anschließt, Verbundteile aus Schaumschicht und Oberflächenschicht mit Nähten und die Verwendung dieser Verbundteile.

Innenverkleidungsbauteile für Kraftfahrzeuge werden in der Regel aus Kunststoffen gefertigt und besitzen häufig eine mehrschichtige Struktur aus einem Trägerbauteil und einer Oberflächenschicht. Dabei handelt es sich meist um spritzgegossene Kunststoffbauteile, bei denen als Oberflächenschicht Dekorschichten, Dekorfolien, Formhäute, Gewebe, Textilstoffe, Leder oder Kunstleder eingesetzt werden (nachfolgend als Oberflächenschicht bezeichnet). In Abhängigkeit von Kontur, Struktur und Form des Bauteils und insbesondere aus Gründen der Optik werden dabei häufig Oberflächenschichten mit Funktionsnähten oder Ziernähten eingesetzt (nachfolgend als Nähte bezeichnet). Da genähte Oberflächenschichten, wie beispielsweise Slushhäute aus PVC oder anderen thermoplastischen Polymeren oder auch Polyurethanfolien an den Nahtstellen jedoch durchstochen sind, um einen möglichst realitätsgetreuen Eindruck eines echten Nähkleides zu vermitteln, müssen sie vor dem Hinterschäumen entlang der Naht in der Regel abgedichtet werden, damit kein Schaummaterial durch die Nahtstellen auf die Sichtseite der Oberflächenschicht dringen kann. Dies kann beispielsweise durch den Auftrag von sogenannten Abdichtungsbändern erfolgen, wobei entweder Kaltklebebänder aus beispielsweise Acrylat-Klebstoff oder Schweißbänder aus beispielsweise hitzeaktivierbaren Copolyester-Klebstoffen oder anderweitige Klebebänder verwendet werden können. Derartige Abdichtungsbänder sind beispielsweise in DE 102010034598 A1 beschrieben. Sie haben allerdings den Nachteil, dass sie ein erhöhtes Abzeichnungsrisiko darstellen und unter Druck und Hitze appliziert werden. Weiterhin haben sie den Nachteil, dass Kontursprünge und Radien nur bedingt mit diesem Verfahren abgedichtet werden können. Die Oberflächenschicht, die beispielsweise als Formhaut vorliegen kann, muss auf Grund der Komplexität der Geometrie unter Umständen stark verwirkt werden, sodass das Klebeband in einer flachen lokalen Abwicklung aufgetragen werden kann. Hierzu muss die Oberflächenschicht sowohl von der Dekorseite (nachfolgend auch als A-Seite bezeichnet) als auch von der Innenseite (nachfolgend auch als B-Seite bezeichnet) mit einer Andrückerrolle oder Walze bzw. einer Stützrolle erreicht werden. Die Handhabung der gegen Beschädigungen empfindlichen Dekoroberflächen erfordert zudem einen erheblichen Aufwand in Bezug auf Sorgsamkeit sowohl in der manuellen als auch automatisierten Anwendung der genannten Klebebandabdichtung.

In EP 3141369 A1 wird ein Verfahren zum Abdichten einer Naht einer Formhaut mittels Plastisol beschrieben, wobei das Plastisol auf die Naht aufgetragen wird und bei 160 bis 180°C aufgeschmolzen bzw. ausgehärtet wird. Nachteilig bei diesem Verfahren ist, dass durch die hohe Temperaturanwendung sowohl der Faden der Naht als auch unter Umständen das Basismaterial der Oberflächenschicht in Mitleidenschaft gezogen werden kann, so dass Glanz oder Farbeigenschaften nachteilig beeinflusst werden können oder auch Alterungen der genannten Materialien nachteilig beschleunigt werden. Das beschriebene Plastisol ist weiterhin nicht bei allen Materialien der im Automobilbau eingesetzten Dekorfolienmaterialien einsetzbar da z.B. die Haftung auf einigen Materialien nicht ausreichend gegeben ist. Weiterhin ist die Applikation des Plastisols, in der Regel pulverförmig, auch in der Auftragungsanwendung zum Beispiel in Steilbereichen des Konturverlaufes einer Geometrie nur mit hohem Aufwand oder ebenfalls unter mechanischer Deformierung der Dekorfolie möglich.

Aufgabe der vorliegenden Erfindung ist es daher, die oben aufgeführten Nachteile beim Abdichten von Nähten zu vermeiden und ein Verfahren zur Verfügung zu stellen, mit dem eine zuverlässige Abdichtung der Nähte einer Oberflächenschichtgelingt, so dass bei einer dem Verfahren der Erfindung folgenden Prozessschritt der Hinterschäumung der Oberflächenschicht das flüssig aufgetragene Schaummaterial nicht durch die Nadeleinstichlöcher der Naht austritt und nicht vom Nähfaden / Zierfaden derart aufgesogen werden kann, dass in einer Dochtwirkung das Schaummaterial auf die A-Seite der Oberflächenschicht transportiert werden kann.

Gleiches gilt beim Verfahren, wenn flüssiger Klebstoff zur Fixierung der Oberflächenschicht anstelle von Schaummaterial auf einem stützenden Werkstück eingesetzt wird. Hier gilt es ebenfalls das Durchdringen des Klebstoffs durch die Nadeleinstichlöcher und die Dochtwirkung der Fäden der Naht zu unterbinden. Weiterhin sollen die Fäden der Naht nicht beschädigt oder negativ in Alterung oder Farbeigenschaften beeinflusst werden.

Diese Aufgabe konnte durch das erfindungsgemäße Verfahren gelöst werden.

Gegenstand der Erfindung ist ein Verfahren zum Abdichten einer Naht (4) einer diese Naht (4) aufweisenden Oberflächenschicht (2) mit zwei Seiten (2a und 2b), die Teil eines Verbundteils (1) ist, welches mindestens die Oberflächenschicht (2) und eine auf einer der Seiten (2a oder 2b) der Oberflächenschicht (2) flächig aufgebrachten Polyurethanschaumschicht oder Klebstoffschicht (3) aufweist, umfassend die folgenden Verfahrensschritte:
i) Sprühen oder Gießen eines Abdichtungsmaterials (5) auf einen flächigen Auftragungsbereich auf der Seite der Oberflächenschicht (2), an die sich die Schaumlage oder Klebstofflage (3) anschließt, wobei der Rand des flächigen Auftragungsbereichs die Naht (4) umschließt,
ii) Aushärten des aufgesprühten oder aufgegossenen Abdichtungsmaterials (5),
iii) Aufbringen der Polyurethanschaumschicht oder Klebstoffschicht (3) auf die Seite der Oberflächenschicht (2), auf der sich das ausgehärtete Abdichtungsmaterial (5) befindet,
dadurch gekennzeichnet, dass das Abdichtungsmaterial ein flüssiges Reaktivgemisch auf Polyurethanbasis ist.

Das Reaktivgemisch enthält kein Treibmittel, so dass das Abdichtungsmaterial als kompakte Materialmasse vorliegt.

Bevorzugt umfasst das erfindungsgemäße Verfahren die folgenden Verfahrensschritte:
i) Sprühen oder Gießen des flüssigen Reaktivgemisches auf Polyurethanbasis als Abdichtungsmaterial (5), welches eine Temperatur von 20° bis 90°C, bevorzugt 40° bis 70°C, aufweist, auf einen flächigen Auftragungsbereich auf der Seite der Oberflächenschicht (2), an die sich die Schaumlage oder Klebstofflage (3) anschließt, wobei der Rand des flächigen Auftragungsbereichs die Naht (4) umschließt,
ii) Aushärten des aufgesprühten oder aufgegossenen Abdichtungsmaterials (5) bei Temperaturen von 20° bis 90°C, bevorzugt 30° bis 60°C, innerhalb von 5 Sekunden bis 5 Minuten,
iii) Aufbringen der Polyurethanschaumschicht (3) auf die Seite der Oberflächenschicht (2), auf der sich das ausgehärtete Abdichtungsmaterial (5) befindet.

Das erfindungsgemäße Verfahren wird vorzugsweise kontaktlos durchgeführt.

Ein weiterer Gegenstand der Erfindung ist ein Verbundteil (1) bestehend aus
a) einer Naht (4)
b) einer diese Naht (4) aufweisenden Oberflächenschicht (2) mit zwei Seiten (2a und 2b)
c) eine auf einer der Seiten (2a oder 2b) der Oberflächenschicht (2) flächig aufgebrachten Polyurethanschaumschicht oder Klebstoffschicht (8)
d) einem flächigen Auftragungsbereich aus einem Abdichtungsmaterial (3) aus einem flüssigen Reaktivgemisch auf Polyurethanbasis auf der Seite der Oberflächenschicht (2), an die sich die Polyurethanschaumschicht oder Klebstoffschicht (8) anschließt, wobei der Rand des flächigen Auftragungsbereichs die Naht (4) umschließt.

Bevorzugt handelt es sich bei dem Abdichtungsmaterial (3) um ein Polyurethanreaktivgemisch aus
a) mindestens einem organischen Polyisocyanat ausgewählt aus der Gruppe bestehend aus Polyisocyanaten auf Basis Diphenylmethandiisocyanat und/oder Polyphenylpolymethylenpolyisocyanat und modifizierten organischen Polyisocyanaten auf Basis Diphenylmethandiisocyanat,
b) mindestens einem Polyol mit einem zahlenmittleren Molekulargewicht von 300 bis 15000 g/mol, bevorzugt von 320 bis 13000 g/molausgewählt aus der Gruppe bestehend aus Polyetherpolyolen, Polyesterpolyolen, Polycarbonatdiolen und Polyethercarbonatpolyolen,
c) gegebenenfalls Kettenverlängerern und/oder Vernetzern mit zahlenmittleren Molekulargewichten von 62 bis <300 g/mol
d) Katalysatoren
e) gegebenenfalls Hilfs- und /oder Zusatzmitteln.

Als Polyisocyanat werden bevorzugt organische und/oder modifizierte organische Polyisocyanate auf Basis Diphenylmethandiisocyanat und/oder Polyphenylpolymethylenpolyisocyanat eingesetzt.

Als Polyole werden vorzugsweise Polyoletherpolyole mit einer Funktionalität von 2 bis 6 eingesetzt.

Als Kettenverlängerer und/oderVernetzer, die gegebenenfalls verwendet werden können, können die allgemein bekannten Kettenverlängerer und/oder Vernetzer eingesetzt werden. Hierbei handelt es sich beispielsweise um Diethanolamin, Triethanolamin, Diethyltoluylendiamin, Glyzerin, 1,2-Ethandiol, Butandiol, Diethylenglycol und Isosorbid.

Als Katalysatoren können die aus der Polyurethanchemie bekannten Katalysatoren verwendet werden. Diese sind beispielsweise in Adam, N., Avar, G., Blankenheim, H., Friederichs, W., Giersig, M., Weigand, E., Halfmann, M., Wittbecker, F.-W., Larimer, D.-R., Maier, U., Meyer-Ahrens, S., Noble, K.-L. and Wussow, H.-G. 2005. Polyurethanes. Ullmann's Encyclopedia of Industrial Chemistry, S. 555*.* beschrieben.

Die gegebenenfalls vorhandenen Hilfs- und Zusatzmittel werden in Adam, N., Avar, G., Blankenheim, H., Friederichs, W., Giersig, M., Weigand, E., Halfmann, M., Wittbecker, F.-W., Larimer, D.-R., Maier, U., Meyer-Ahrens, S., Noble, K.-L. and Wussow, H.-G. 2005. Polyurethanes. Ullmann's Encyclopedia of Industrial Chemistry, S. 556. beschrieben.

Für die Polyurethanschaumschicht (8)werden Polyurethanschäume wie sie beispielsweise in EP-A 2628756 beschrieben sind eingesetzt.

Die abzudichtende Oberflächenschicht (2) besteht vorzugsweise aus einem thermoplastischen oder duroplastischen Kunststoff. Sie kann jedoch auch aus Kunstleder, behandeltem oder unbehandeltem Leder oder textilen gewebten oder nicht gewebten Werkstoffen bestehen. Bevorzugt wird als Kunststoff Polyvinylchlorid (PVC), thermoplastisches Olefin (TPO) und Polyurethan eingesetzt. Diese Kunststoffe können beispielsweise durch Verfahren wie Pulversintern (Slushhauttechnik) hergestellt werden. Die Oberflächenschicht kann vorzugsweise auch aus thermoplastischem Folienmaterial, welches durch einen vorgelagerten Tiefziehprozess in die gewünschte Geometrie gebracht wird, oder aber aus Polyurethan-Folienmaterialien bestehen. Die Oberflächenschicht (2) kann auf der der Schaumschicht (8) gegenüberliegenden Seite genarbt, strukturiert oder glatt sein.

Der Faden der Naht kann z.B. aus natürlichen Werkstoffen wie Wolle, Baumwolle oder synthetischen Werkstoffen wie Kunststoff bestehen.

Bei dem erfindungsgemäßen Verfahren zum Abdichten einer Naht einer Oberflächenschicht wird die Folie zunächst konturgebunden in einer Vorrichtung oder flächig auf einer stützenden Unterlage positioniert, sodass sie in Solllage der Kontur ohne jegliche mechanische Deformation dem Abdichtungsverfahren bereitgestellt werden kann. Diese Vorrichtung dient der wiederholgenauen Positionierung der Oberflächenschicht als auch der Konturunterstützung des in der Regel flexiblen Folienmaterials. Die Vorrichtung kann auch für Folgeprozesse verwendet werden.

Die in der Oberflächenschicht durch ein Nadelstich-Nähverfahren eingebrachte Naht hat einen produkt- oder variantenspezifischen Verlauf, der über Konturen und Steilbereiche hinweg auch mit Unterbrechungen segmentiert ausgestaltet sein kann.

In dem erfindungsgemäßen Verfahren wird zunächst das flüssige Polyurethanreaktivgemisch mit Hilfe einer Austragsdüse aufgesprüht oder gegossen und zwar auf einen flächigen Auftragungsbereich, wobei der Auftragungsbereich dem Verlauf nach die Naht umschließt. Da es sich um ein Reaktivgemisch handelt durchläuft das Material unter anstehendem Förderdruck einen Mischkopf der die mindestens 2 Komponenten des Reaktivgemisches möglichst ideal miteinander zu einer homogenen Verteilung der Komponenten vermischt. Die Einzelkomponenten des Reaktivgemisches werden dabei aus einem Dosiersystem in Einzelleitungen dem Mischkopf zugeführt.

Das Reaktivgemisch reagiert schnell und bei niedrigen Temperaturen zu dem gewünschten Abdichtungsmaterial aus. Dies hat den Vorteil, dass der Faden der Naht als auch das Basismaterial der Oberflächenschicht bei den niedrigen Temperaturen nicht beeinträchtigt wird und dass nach nur kurzer Aushärtezeit des Abdichtungsmaterials der Schaum zur Bildung der Schaumlage oder der Klebstoff anschließend aufgetragen werden kann.

Die Abdichtungswirkung wird durch eine gute Haftung des Reaktivgemisches an der Oberflächenschicht in unmittelbarer Nähe des Nahtverlaufes als auch durch die Einbettung des B-seitig an der Oberflächenschicht erhaben hervorstehenden Nähfadens in dem Abdichtungswerkstoff erzielt. Die Viskosität des Abdichtungsmaterials als auch die kurze Reaktionszeit verhindern das drucklose Durchdringen der Nadelstichlöcher sowie die Dochtwirkung des Nahtfadens.

Die Viskosität sowie die Haftungseigenschaften des Reaktivgemisches sind dabei so eingestellt, dass ein kontaktloses Sprüh- oder Gießverfahren eingesetzt werden kann, bei dem auch eventuell bestehende Steilbereiche der Kontur mit dem Reaktivgemisch benetzt werden können. Durch das kontaktlose Auftragsverfahren wird jegliche mechanische Beanspruchung der Oberflächenschicht durch den Abdichtungsprozess vermieden. Die Ansteuerung der Austragsdüse erlaubt es auch, Unterbrechungen im Nahtverlauf im Materialauftrag abzubilden. Durch eine flexible Bahnprogrammierung eines Bewegungsautomaten, der die Austragsdüse entlang des Nahtverlaufes führt, sind komplexe Bewegungsabläufe realisierbar.

Verschiedene Abstimmungen der Austragsdüse erlauben es, den Austragskegel bzw. die Gießbreite zu limitieren. So können zum Beispiel zusätzliche Luftströmungen an der Düse erzeugt werden, die positiv auf das Sprüh- oder Gießverhalten einwirken. Die aufgeführte Austragsmöglichkeit des Gießens ermöglicht den nahezu drucklosen Austrag, bei dem das Abdichtungsmaterial in der Regel über eine Schlitzdüse über den Nahtverlauf gegossen wird.

Varianten des Abdichtungsmaterials können zudem mit Additiven so abgewandelt werden, dass sich das Abdichtungsmaterial möglichst kontrastreich zur Farbe des Materials der Oberflächenschicht absetzt, um eventuelle Fehlapplikationen mit Durchdringungen zur A-Seite der Oberflächenschicht optisch zu erkennen. Dies kann mit Einfärbungen des Materials oder z.B. fluoreszierenden Zusätzen erreicht werden. Eine Überprüfung kann manuell durch optische Inspektion oder automatisch über Bildverarbeitungssysteme oder andere optische Sensoren erfolgen. Gleiche Prinzipien können angewendet werden, um den B-seitigen Auftrag des Abdichtungsmaterials in Qualität und Quantität zu überprüfen.

Die erzeugte Abdichtung ist auch in ausreagiertem Zustand flexibel und in ihren Eigenschaften dahingehend vergleichbar zu dem flexiblen Material der Oberflächenschicht.

Die Verbundteile (1) können z.B. zur Herstellung von Innenverkleidungsbauteilen für Kraftfahrzeuge, wie beispielsweise Instrumententafeln, Armlehnen, Türseitenverkleidungen, Mittelkonsolen und Abdeckungen für Handschuhkästen eingesetzt werden.

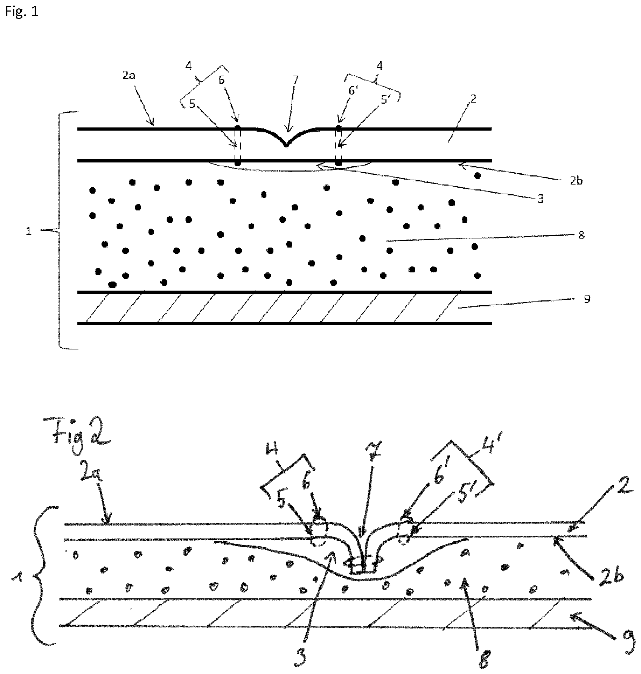

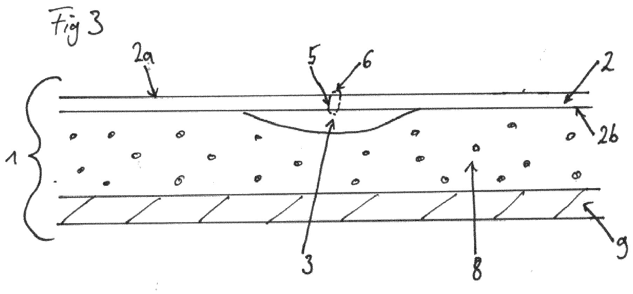

Figuren 1, 2 und 3 zeigen ein Verbundteil (1) aus einer Oberflächenschicht (2) mit zwei Seiten ((2a) und (2b)) mit Nähten ((4) und (4')) und einer Schaumschicht (8) im Querschnitt:
1: Verbundteil
2: Oberflächenschicht mit einer Sichtseite 2a (A-Seite) und einer der Schaumschicht zugewandten Seite 2b (B-Seite)
3: Abdichtungsmaterial aus einem Polyurethanreaktivgemisch
4:Naht
5: Durchstich des Fadens
6: Faden der Naht
7: Einkerbung zur optischen Darstellung einer vorgetäuschten Fügestelle zweier Folienteile der Oberflächenschicht an der Sichtseite 2a
7a: tatsächliche Fügestelle zweier Oberflächenschichten
8: Schaumschicht oder Klebstoffschicht
9: Trägerschicht

Figur 1 zeigt eine Oberflächenschicht 2 im Querschnitt mit einer Ziernaht. Diese Ziernaht ist eine Naht, die den Eindruck zweier miteinander vernähter Oberflächenschichten vermitteln soll, die jedoch physikalisch keine Trennung enthält. Die Oberflächenschicht2 weist zwei Ziernähte 4 mit jeweils einem Durchstich 5 auf. Zwischen den beiden, im Wesentlichen parallel zueinander verlaufenden Ziernähten 4 verläuft eine Einkerbung 7 auf einer Sichtseite 2a, die den Eindruck vermitteln soll, dass an dieser Stelle zwei z.B. Oberflächenschichten aneinandergenäht sind (Anlehnung an die Lederverarbeitung). Um eine Abdichtung der Ziernähte 4 für die Hinterschäumung oder flächigen Verklebung der Oberflächenschicht 2 bereitzustellen, ist der Bereich zwischen den beiden Nahtverläufen 4 sowie über die Nahtverläufe hinweg auf der zu beschäumenden oder mit Klebstoff zu benetzenden Seite 2b der Oberflächenschicht2 mit Abdichtungsmaterial 3 überdeckt. Die Durchstiche 5 der beiden Nähte 4 sind vom Abdichtungsmaterial 3 dabei ausreichend überdeckt, so dass ein Erreichen der Nahtverläufe durch das Hinterschäummaterial oder das Klebstoffmaterial ausgeschlossen werden kann.

Figur 2 zeigt eine Abwandlung der Figur 1. In dieser Darstellung wird die Anwendung bei einer tatsächlichen Fügestelle 7a der Oberflächenschicht 2 im Querschnitt aufgezeigt.

Figur 3 zeigt eine weitere Abwandlung der Figuren 1 und 2. In dieser Darstellung wird die Anwendung bei einem Einzelnahtverlauf 4 ohne eine parallel verlaufende zweite Naht 4' und ohne Einkerbung 7 dargestellt

### Beispiel:

**Ausgangsverbindungen:**

| | |
|---|---|
| Polyol A: | Polyalkylenoxid auf Basis Glyzerin als Starter und Propylenoxid mit 18% endständigem Ethylenoxidblock; OH-Zahl 35 mg KOH/gPolyol |
| Polyol B: | Polyalkylenoxid auf Basis Propylenglycol als Starter und Propylenoxid mit 29% endständigem Ethylenoxidblock; OH-Zahl 28 mg KOH/gPolyol |
| Kettenverlängerer A: | Diethylenglycol |
| Kettenverlängerer B: | 1,4 Butandiol |
| Katalysator A: | Dabco®NE1060 der Firma Evonik, Essen |
| Katalysator B: | FOMREZ® UL-28 der Firma Momentive Performance Materials |
| Hilfsmittel A: | Irganox® 1135 der Firma BASF |
| Isocyanat: | Desmodur® PC-N von Covestro Deutschland AG ; Diphenylmethandiisocyanat/Polyphenylmethanpolyisocyanat-Gemisch der Firma Covestro Deutschland AG mit einem NCO-Gehalt von 26,0 Gew.-%; Viskosität bei 25°C von 120 mPa*s |

### Versuchsbeschreibung:

Die Herstellung erfolgte in einer beheizbaren Form mit einer Formtemperatur von 25°C. Die Temperatur der Polyolkomponente (Komponenten b) bis e)) betrug 70°C und die Temperatur der Isocyanatkomponente a) betrug 65°C. Die Komponenten wurden im Mischkopf bei einem Druck von 130 bar (Polyolkomponente) bzw. 110 bar (Isocyanatkomponente) vermischt und über einen luftunterschützten Sprühkopf auf einen die Ziernaht umschließenden Auftragungsbereich der in der Form vorliegenden Formhaut mit Ziernaht aufgesprüht.

Nach einer 2 minütigen Aushärtung wurde in einem weiteren Schritt eine Polyurethanschaumschicht auf der Seite der Formhaut, auf der sich das ausgehärtete Abdichtungsmaterial befindet, hergestellt. Dazu wurde auf die Formhaut mit der abgedichteten Ziernaht in einer beheizten Form bei 42°C ein Polyurethan-Reaktivgemisch bestehend aus der Polyolkomponente Bayfill® 53IF40 von Covestro Deutschland AG und dem Isocyanat Desmodur® 58IF07 von Covestro Deutschland AG über einen Hochdruckmischkopf appliziert und die Form dicht verschlossen. Nach 90 Sekunden bei 42°C wurde die Form geöffnet und das Verbundelement entnommen. Die Dichtigkeit der Naht wurde visuell geprüft.

**Tabelle: Zusammensetzung des Polyurethanreaktivgemisches für die Abdichtung der Naht**

| **Komponente** | | |
|---|---|---|
| Polyol A | [Gew.-Tle.] | 42,35 |
| Polyol B | [Gew.-Tle.] | 44,05 |
| Kettenverlängerer A | [Gew.-Tle.] | 2,00 |
| Kettenverlängerer B | [Gew.-Tle.] | 11,00 |
| Katalysator A | [Gew.-Tle.] | 0,08 |
| Katalysator B | [Gew.-Tle.] | 0,02 |
| Hilfsmittel A | [Gew.-Tle.] | 0,5 |
| | | |
| Isocyanat | [Gew.-Tle.] | 53 |
| | | |
| Ergebnis: | | kein Durchtritt des Schaumes durch die Löcher der Naht und keine Beschädigung der Naht oder des Fadens |

## Patentansprüche

1. Verfahren zum Abdichten einer Naht (4) einer diese Naht (4) aufweisenden Oberflächenschicht (2) mit zwei Seiten (2a und 2b), die Teil eines Verbundteils (1) ist, welches mindestens die Oberflächenschicht (2) und eine auf einer der Seiten (2a oder 2b) der Oberflächenschicht flächig aufgebrachten Polyurethanschaumschicht oder Klebstoffschicht (8) aufweist, umfassend die folgenden Verfahrensschritte:
i) Sprühen oder Gießen eines Abdichtungsmaterials (3) auf einen flächigen Auftragungsbereich auf der Seite der Oberflächenschicht (2), an die sich die Polyurethanschaumschicht oder Klebstoffschicht (8) anschließt, wobei der Rand des flächigen Auftragungsbereichs die Naht (4) umschließt,
ii) Aushärten und Haften des aufgesprühten oder gegossenen Abdichtungsmaterials (3),
iii) Aufbringen der Polyurethanschaumschicht (8) auf die Seite der Oberflächenschicht (2), auf der sich das ausgehärtete Abdichtungsmaterial (3) befindet,
**dadurch gekennzeichnet, dass** das Abdichtungsmaterial (3) ein flüssiges Reaktivgemisch auf Polyurethanbasis ist.

2. Verfahren gemäß Anspruch 1, **dadurch gekennzeichnet, dass** das Verfahren die folgenden Verfahrensschritte aufweist:
i) Sprühen oder Gießen eines Abdichtungsmaterials (3), welches eine Temperatur von 20° bis 90°C, bevorzugt 40° bis 70°C, aufweist, auf einen flächigen Auftragungsbereich auf der Seite der Oberflächenschicht (2), an die sich die Polyurethanschaumschicht oder Klebstoffschicht (8) anschließt, wobei der Rand des flächigen Auftragungsbereichs die Naht (4) umschließt,
ii) Aushärten und Haften des aufgesprühten oder gegossenen Abdichtungsmaterials (3) bei Temperaturen von 20° bis 90°C, bevorzugt 30° bis 60°C, innerhalb von 5 Sekunden bis 5 Minuten,
iii) Aufbringen der Polyurethanschaumschicht (8) auf die Seite der Oberflächenschicht (2), auf der sich das ausgehärtete Abdichtungsmaterial (3) befindet.

3. Verfahren gemäß Anspruch 1 oder 2, **dadurch gekennzeichnet, dass** das Abdichtungsmaterial(3) kontaktlos über ein Sprüh- oder Gießverfahren auf die Seite der Oberflächenschicht (2), an die sich die Polyurethanschaumschicht oder Klebstoffschicht (8) anschließt, aufgetragen wird.

4. Verfahren gemäß einem oder mehreren der Ansprüche 1 bis 3, **dadurch gekennzeichnet, dass** das flüssige Reaktivgemisch auf Polyurethanbasis folgende Komponenten enthält
a) mindestens ein organisches Polyisocyanat ausgewählt aus der Gruppe bestehend aus Polyisocyanaten auf Basis Diphenylmethandiisocyanat und/oder Polyphenylpolymethylenpolyisocyanat und modifizierten organischen Polyisocyanaten auf Basis Diphenylmethandiisocyanat,
b) mindestens ein Polyol mit einem zahlenmittleren Molekulargewicht von 300 bis 15000 g/mol, bevorzugt von 320 bis 13000 g/mol ausgewählt aus der Gruppe bestehend aus Polyetherpolyolen, Polyesterpolyolen, Polycarbonatdiolen und Polyethercarbonatpolyolen
c) gegebenenfalls Kettenverlängerer und/oder Vernetzer mit zahlenmittleren Molekulargewichten von 62 bis <300 g/mol,
d) Katalysatoren
e) gegebenenfalls Hilfs- und/oder Zusatzmittel.

5. Verfahren gemäß Anspruch 1, **dadurch gekennzeichnet, dass** die Oberflächenschicht (2) aus einem thermoplastischen Kunststoff besteht.

6. Verfahren gemäß Anspruch 1, **dadurch gekennzeichnet, dass** die Oberflächenschicht (2) aus einem duroplastischen Kunststoff besteht.

7. Verfahren gemäß Anspruch 1, **dadurch gekennzeichnet, dass** die Oberflächenschicht (2) aus einem elastomeren Kunststoff besteht.

8. Verfahren gemäß Anspruch 1, **dadurch gekennzeichnet, dass** die Oberflächenschicht (2) aus einem natürlichen Werkstoff besteht.

9. Verfahren gemäß Anspruch 1, **dadurch gekennzeichnet, dass** die Oberflächenschicht (2) aus einem synthetischen textilen, gewobenen oder nicht gewobenen Werkstoff besteht.

10. Verfahren gemäß Anspruch 1, **dadurch gekennzeichnet, dass** die Oberflächenschicht (2) aus einem natürlichen textilen, gewobenen oder nicht gewobenen Werkstoff besteht.

11. Verfahren gemäß Anspruch 1, **dadurch gekennzeichnet, dass** der Polyurethanschaum (8) durch Aufsprühen einer entsprechenden Polyurethanreaktionsmischung auf die Seite der Oberflächenschicht (2), auf der sich das Abdichtungsmaterial (3) befindet, gebildet wird.

12. Verfahren gemäß Anspruch 1, **dadurch gekennzeichnet, dass** die Naht (4) mit einem Faden genäht wird, der das Durchstechen der Oberflächenschicht im Nähverfahren erfordert.

13. Verfahren gemäß Anspruch 1, **dadurch gekennzeichnet, dass** der Faden der Naht (4) derart in das Material der Oberflächenschicht eingebettet ist, das der Faden Kontakt zum Schaummaterial oder dem Klebstoff hat.

14. Verbundteil (1) bestehend aus
a) einer Naht (4)
b) einer diese Naht (4) aufweisenden Oberflächenschicht (2) mit zwei Seiten (2a und 2b)
c) einer auf einer der Seiten (2a oder 2b) der Oberflächenschicht (2) flächig aufgebrachten Polyurethanschaumschicht oder Klebstoffschicht (8)
d) einem flächigen Auftragungsbereich aus einem Abdichtungsmaterial (3) aus einem flüssigen Reaktivgemisch auf Polyurethanbasis auf der Seite der Oberflächenschicht (2), an die sich die Polyurethanschaumschicht oder Klebstoffschicht (8) anschließt, wobei der Rand des flächigen Auftragungsbereichs die Ziernaht (4) umschließt.

15. Verwendung des Verbundteils (1) gemäß Anspruch 14 zur Herstellung von Instrumententafeln, Armlehnen, Türseitenverkleidungen, Mittelkonsolen und Abdeckungen für Handschuhkästen.
